# EUROPÄISCHE PATENTSCHRIFT

(11) **EP 1 748 210 B1**
(45) Veröffentlichungstag und Bekanntmachung des Hinweises auf die Patenterteilung: **15.09.2010**
(21) Anmeldenummer: 06014636.2
(22) Anmeldetag: 14.07.2006
(51) Int. Cl.: F16D 55/22, F16D 65/18

(54) **Scheibenbremse für Fahrzeuge sowie Schutzscheibe zur Verwendung in einer Scheibenbremse**
Disc brake for vehicles and protecting cover for a disc brake
Frein à disque pour vehicules et couverture protectrice pour un frein à disque

(30) Priorität: 29.07.2005 DE 102005035583
(43) Veröffentlichungstag der Anmeldung: 31.01.2007
(60) Teilanmeldung: 10155239.6
(73) Patentinhaber: BPW Bergische Achsen KG, 51674 Wiehl (DE)
(72) Erfinder: Klaas, Thomas, 51580 Reichshof (DE); Pehle, Michael, 51371 Leverkusen (DE); Abt, Christian, 51643 Gummersbach (DE); Dowe, Günter, 51588 Nümbrecht (DE)
(74) Vertreter: Christophersen, Ulrich Rudolf

(56) Entgegenhaltungen:
- EP-A- 1 441 142
- WO-A-01/75324
- WO-A-2004/102023
- GB-A- 2 008 205

## Beschreibung

Die Erfindung betrifft eine Scheibenbremse für Fahrzeuge nach dem Oberbegriff des Patentanspruchs 1.

Bei Scheibenbremsen ist ein als Druckstempel ausgebildetes Kraftübertragungselement in axialer Richtung der Bremsscheibe verschiebbar aus dem Bremssattelgehäuse heraus geführt. Bei jeder Betätigung der Bremse wird der Druckstempel über eine Zuspanneinrichtung in Richtung der Bremsscheibe axial zugestellt, und nach Beendigung des Bremsvorgangs in entgegengesetzter Richtung bewegt. In der Regel ist eine Nachstelleinrichtung vorhanden, um im Fahrbetrieb ein bestimmtes Spaltmaß zwischen Bremsbelag und Bremsscheibe einzuhalten. Da im Gehäuse der Scheibenbremse schmutz- und feuchtigkeitsempfindliche Bauteile, wie z.B. die Nachstelleinrichtung oder Komponenten der Zuspanneinrichtung, untergebracht sind, ist das Gehäuse mit Hilfe eines Dichtelements, welches zum Ausgleich der Axialbewegungen des Druckstempels gegenüber dem Bremssattelgehäuse axial stark verformbar gestaltet ist, vor Schmutz und Feuchtigkeit abgeschirmt.

Als Dichtelement dienen häufig faltenbalgähnliche Gummimanschetten, die mit ihrem einen Ende am Bremssattelgehäuse, und mit ihrem anderen Ende im vorderen, d.h. bremsscheibenzugewandten Bereich des Druckstempels befestigt sind und auf diese Weise das Innere des Bremssattelgehäuses gegenüber Verunreinigungen schützen. Mit bei zunehmendem Bremsverschleiß stärkerer Zustellung des Druckstempels vergrößert sich der Abstand zwischen dessen vorderem Ende und dem Gehäuse, so dass auch der mittlere Bereich des balgförmigen Dichtelements eine entsprechende Streckung nach außen erfährt, d. h. in den Raum zwischen Gehäuse und Bremsscheibe wandert.

Derartige, z. B. aus der DE 103 31 929 B3, der EP 0 565 997 A1 und der WO 2004/102023 A1 bekannte Dichtelemente haben sich als schadensanfällig herausgestellt. Der weit vorne am Druckstempel befestigte Endbereich des Dichtelements befindet sich sehr nah an der Bremsscheibe bzw. dem Bremsbelag, wo während des Bremsvorganges hohe Temperaturen auftreten. Da die elastische Dichtung üblicherweise aus einem nicht sehr temperaturbeständigen Material gefertigt sind, ist ihre Lebensdauer insgesamt gering. Als für die Lebensdauer des Dichtelements ebenfalls von Nachteil hat es sich erwiesen, dass dieses mit zunehmendem Bremsverschleiß immer weiter in den Raum zwischen Bremssattelgehäuse und Bremsscheibe expandiert, wo es offen liegt und den im Fahrbetrieb teilweise erheblichen Belastungen, wie etwa Spritzwasser, Grobstaub und Steinschlägen ausgesetzt ist. Auch dies hat sich für die Schadensanfälligkeit und die Lebensdauer der Dichtelemente als nachteilig erwiesen.

Um eine langlebigere Abdichtung des Inneren des Bremssattelgehäuses zu erreichen, ist es aus der EP 1 441 142 A1 bekannt, zusätzlich zu einem Dichtelement der herkömmlichen Art ein zweites Dichtelement hinter diesem anzuordnen. Das zweite Dichtelement ist mit einem ersten Endbereich gegenüber dem Bremssattelgehäuse und mit einem zweiten Endbereich am bremsscheibenabgewandten Ende des Druckstempels festgelegt. Es soll für den Fall, dass das erste Dichtelement eine Beschädigung erleidet, weiterhin Schutz bieten. Als nachteilig bei dieser zweistufigen Dichtung hat stich neben deren vergleichsweise aufwendigem Aufbau erwiesen, dass der mittlere Bereich des zweiten Dichtelements mit zunehmendem Bremsverschleiß bzw. größer werdender Zustellung des Druckstempels eine Schlaufe bildet, die unter Annäherung an die häufig hohe Temperaturen aufweisenden Bremsbeläge bzw. die Bremsscheibe in den Raum zwischen Bremssattelgehäuse und Bremsscheibe eintritt und bei Ausfall des ersten Dichtelements ebenfalls den dortigen äußeren Belastungen ausgesetzt ist. Daher vermag das zweite Dichtelement die Lebensdauer der Dichtung nicht nachhaltig zu erhöhen.

Eine Scheibenbremse mit den Merkmalen des Oberbegriffs ist aus der WO 01/75324 A1 bekannt. Zur Abdichtung zwischen Bremssattelgehäuse und dem darin verschieblichen Kraftübertragungselement dient ein trapezförmig gestaltetes Dichtelement. Dessen innerer, Endbereich sitzt nahe dem bremsscheibenabgewandten Ende des Kraftübertragungselements. Der Mittelbereich des Dichtelements ist als Rollbalg gestaltet und liegt flächig an einer teils konisch gestalteten Abrollfläche des Kraftübertragungselements an. Bei der Zuspannung der Bremse kommt es zu einem zunehmenden Abrollen dieses Rollbalgs. Große Bereiche des Dichtelements gelangen dabei in den Raum zwischen Gehäuse und Bremsscheibe und damit nahe an die Bremsscheibe bzw. den Bremsbelag, wo während des Bremsvorgangs hohe Temperaturen auftreten. Die Expansion der Dichtung aus dem Bremssattelgehäuse hinaus birgt zudem die Gefahr, dass die betreffenden Dichtungsbereiche den im Fahrbetrieb teilweise erheblichen Belastungen aufgrund Spritzwasser, Grobstaub und Steinschlägen ausgesetzt sind, was wiederum für die Schadensanfälligkeit und die Lebensdauer der Dichtung nachteilig ist.

Der Erfindung liegt die Aufgabe zugrunde, die durch äußere Einflüsse hervorgerufene Schadensanfälligkeit der zwischen dem Gehäuse der Scheibenbremse und dem darin verschiebbar angeordneten Kraftübertragungselement, z. B. Druckstempel, vorgesehenen Abdichtung zu verringern.

Zur Lösung dieser Aufgabe wird eine Scheibenbremse für Fahrzeuge mit den Merkmalen des Patentanspruchs 1 vorgeschlagen.

Durch Verwendung eines Dichtelementes, dessen gegenüber dem Kraftübertragungselement festgelegter Endbereich nahe dessen bremsscheibenabgewandtem Ende festgelegt ist, wird verhindert, dass das Dichtelement bei dessen axialer Stauchung aus dem Bremssattelgehäuse ins Freie austritt und dort offen liegt. Vor allem der mittlere Bereich des Dichtelementes ist daher in keinem Betriebszustand der Scheibenbremse äußeren Belastungen wie z. B. Verschmutzungen, Steinschlägen usw. ausgesetzt. Trotz ihres vergleichsweise einfachen Aufbaus zeigt die Abdichtung daher eine geringe Schadensanfälligkeit sowie eine hohe Lebensdauer. Zudem sind die auf das Dichtelement einwirkenden Temperaturen vergleichsweise gering, da die Befestigung des zweiten Endbereichs des Dichtelementes an dem bremsscheibenabgewandten Ende des Kraftübertragungselementes erfolgt, und damit weit entfernt vom Ort der beim Bremsen entstehenden Hitze.

Von zusätzlichem Vorteil ist, dass der mittlere Bereich des Dichtelementes als sich bei axialer Stauchung in mehreren und vorzugsweise mindestens drei Lagen schichtender Faltenbalg ausgebildet ist. Auf diese Weise lassen sich große axiale Stauchwege des Dichtelementes ermöglichen. Ebenfalls von Vorteil ist, dass sich die Lagen zwischen dem ersten und dem zweiten Endbereich schichten, wobei die Lagen in axialer oder in radialer Richtung zwischen den Endbereichen liegen können. Durch ausschließliche Schichtung der Lagen zwischen den beiden Endbereichen wird ein Austreten des mittleren Bereichs aus dem Gehäuse des Bremssattels unabhängig vom Verschleißzustand der Bremse sicher vermieden.

Eine vorteilhafte Ausführung ist **dadurch gekennzeichnet, dass** die Lagen in radialer Richtung übereinander geschichtet sind. Die Schichtung der Lagen in radialer Richtung ermöglicht große axiale Stauchwege, d.h. Verkürzungen des Dichtelements, ohne dass der mittlere Bereich des Dichtelements auch nur teilweise aus dem Bremssattelgehäuse hervortritt. Ebenfalls von Vorteil kann eine Ausgestaltung sein, bei der die Lagen in axialer Richtung geschichtet sind, wodurch sich eine ziehharmonikaartige Gestalt des Faltenbalgs ergibt, die den für die Unterbringung des Dichtelements im Bremssattelgehäuse in radialer Richtung erforderlichen Bauraum begrenzt und den Austritt des mittleren Bereichs aus dem Bremssattelgehäuse ebenfalls sicher verhindert wird.

In vorteilhafter Ausgestaltung wird vorgeschlagen, dass der erste Endbereich an einer das Bremssattelgehäuse zur Bremsscheibe hin abdeckenden Verschlussplatte festgelegt ist. Aus fertigungstechnischen Gründen werden die oftmals als Gußteile gefertigten Bremssattelgehäuse zur Bremsscheibe hin über eine separate Verschlussplatte abgedeckt. An dieser Verschlußplatte kann das Dichtelement auf besonders einfache Weise z.B. kraftschlüssig gegenüber dem Bremssattelgehäuse festgelegt werden.

Vorteilhaft sind die Endbereiche des Dichtelements mit einer Metalleinlage verstärkt, um auf diese Weise einen besseren Sitz des aus einem elastischen Grundmaterial bestehenden Dichtelements gegenüber dem Bremssattelgehäuse bzw. dem Kraftübertragungselement zu erreichen. Die Metalleinlage kann schon bei der Herstellung des aus einem Gummimaterial gefertigten Dichtelements mit vorgesehen werden und von dem Gummimaterial entweder vollständig oder nur teilweise umgeben sein.

Vorteilhaft besteht das Kraftübertragungselement aus einem innerhalb des Bremssattelgehäuses verschiebbar geführten Schaft sowie einem außerhalb des Bremssattelgehäuses angeordneten Druckteller. Der vergleichsweise schmale Schaft lässt sich einfach aus dem Gehäuse des Bremssattels hinausführen, wo der einen vergleichsweise großen Durchmesser aufweisende Druckteller eine flächige Anlage gegenüber der Belagplatte eines Bremsbelags bildet. Mit dieser Ausgestaltung lässt sich somit eine Führung des Kraftübertragungselements sowie eine gleichmäßige Verteilung der für den Bremsvorgang erforderlichen Kräfte erreichen.

Im Rahmen der Wartung oder Reparatur der Scheibenbremse ist es von Vorteil, wenn eine zwischen dem Bremsbelag und dem Dichtelement angeordnete Schutzscheibe aus zwei sich zu einer Ringform ergänzenden Teilscheiben zusammengesetzt ist. Dies vereinfacht zudem die Montage und Demontage der Scheibenbremse.

Vorzugsweise sind die beiden Teilscheiben durch Formschlusselemente lösbar miteinander verbunden, wobei diese Formschlusselemente vorzugsweise in axialer Richtung voneinander trennbar gestaltet sind.

Im Hinblick auf die Schutzfunktion der Scheibe, auch Strahlungshitze von dem dahinter angeordneten Dichtelement abzuhalten, sollte die Schutzscheibe entweder aus Metall, oder aber aus einem thermisch belastbaren Kunststoff bestehen.

Eine Ausgestaltung sieht vor, dass die Schutzscheibe an ihrem Innenrand mit mindestens einer Führungsfläche zur Führung des Kraftübertragungselements versehen ist. Diese Führungsfläche ermöglicht eine reibungsarme und zuverlässige Führung des Kraftübertragungselements bzw. Druckstempels, und dies auf konstruktiv einfache Weise. Insofern dient die Schutzscheibe nicht nur dazu, die durch äußere Einflüsse hervorgerufene Schadensanfälligkeit der Abdichtung zu verringern, sondern sie übernimmt zusätzlich die Funktion eines Führungselementes für das jeweilige Kraftübertragungselement bzw. den jeweiligen Druckstempel.

Eine weitere Ausgestaltung sieht vor, dass die Schutzscheibe mit über ihren Umfang verteilten Durchtrittsöffnungen versehen ist. Durch diese Öffnungen kann z. B. Feuchtigkeit aus dem Zwischenraum zwischen Kraftübertragungselement und Dichtelement austreten. Die Größe der Durchtrittsöffnungen ist dabei so zu wählen, dass gröbere Verunreinigungen, z. B. kleine Steine, in diesen Zwischenraum nicht eintreten, zugleich aber Feuchtigkeit und Staub zuverlässig austreten können, so dass sich in dem Zwischenraum keine groben Verunreinigungen bzw. Feuchte ansammeln kann.

Weitere Vorteile und Einzelheiten der Erfindung werden nachfolgend unter Bezugnahme auf die beigefügten Zeichnungen beispielhaft erläutert. Darin zeigen
- Fig. 1: eine stark vereinfachte Schnittdarstellung einer Scheibenbremse, bei der sich die Kraftübertragungselemente in der hinteren Endposition befinden,
- Fig. 2: eine perspektivische Darstellung einiger Bauteile nach Fig. 1,
- Fig. 3: eine Schnittdarstellung des Bremssattels einer Scheibenbremse, wobei sich die Kraftübertragungselemente in ihrer vorderen Endposition befinden,
- Fig. 4: eine perspektivische Darstellung einiger Bauteile nach Fig. 3,
- Fig. 5: eine der in der Scheibenbremse nach den Fign. 1 bis 4 verwendeten Schutzscheiben in einer perspektivischen Einzeldarstellung,
- Fig. 6: in perspektivischer Darstellung zwei Teilscheiben, aus denen die Schutzscheibe nach Fig. 5 zusammengesetzt ist;
- Fia. 7: in Schnittdarstellung ein Kraftübertragungselement mit zugehörigem Dichtelement in beiden Endstellungen;
- Fig. 8: in Schnittdarstellung ein anders gestaltetes Kraftübertragungselement mit zugehörigem Dichtelement in seiner am weitesten ausgefahrenen Stellung und
- Fig. 8a: die in Fig. 8 mit VIII bezeichnete Einzelheit in stark vergrößerter Darstellung.

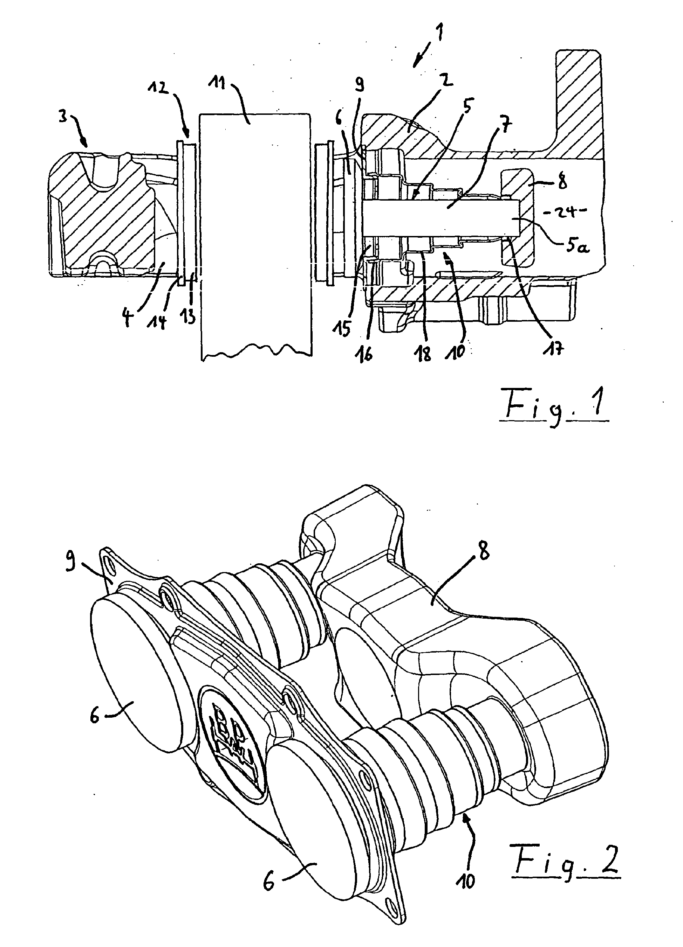

In Fig. 1 ist der Aufbau einer für Fahrzeuge und insbesondere für Schwerlast-Fahrzeuge wie z. B. Lkw-Anhänger bestimmten Scheibenbremse in einer Schnittdarstellung dargestellt. Die Scheibenbremse besteht aus einem Bremssattel 1 sowie einer Bremsscheibe 11, zu deren beiden Seiten Bremsbeläge 12 angeordnet sind, die aus einem Reibbelag 13 sowie einer rückseitigen Belagträgerplatte 14 bestehen.

Wie Fig. 1 weiter erkennen lässt, besteht der Bremssattel 1 aus einer das obere Ende der Bremsscheibe 11 U-förmig umgebenden Bremssattelbrücke 3 sowie einem gegenüber dem Fahrzeug schwimmend gelagerten Gehäuse 2. Im Innern 24 des Gehäuses 2 ist ein Kraftübertragungselement 5 nach Art eines Druckstempels verschiebbar untergebracht. Dieser befindet sich in der Darstellung gemäß Fig. 1 in seiner hinteren Endstellung. Der Druckstempel besteht aus einem Schaft 7 und einem sich in axialer Richtung an den Schaft 7 anschließenden Druckteller 6 größeren Durchmessers. Der Druckteller 6 stützt sich bei Bremsbetätigung gegen den jeweiligen Bremsbelag 12 ab. Am rückwärtigen bzw. bremsscheibenabgewandten Ende 5a des Druckstempels bzw. Kraftübertragungselements 5 befindet sich eine Traverse 8, welche, wie dies auch Fig. 2 zu entnehmen ist, zwei der innerhalb des Bremsgehäuses 2 angeordneten Kraftübertragungselemente 5 miteinander koppelt.

Bei Betätigung der Scheibenbremse werden die Kraftübertragungselemente 5 in Richtung der Bremsscheibe 11 axial aus dem Bremssattelgehäuse 2 hinaus geschoben, um die Bremsbeläge 12 über die Druckteller 6 mit der Bremsscheibe 11 in Anlage zu bringen. Die Kraftübertragungselemente 5 werden dabei rückseitig mittels einer auf der Zeichnung nicht dargestellten Zuspanneinrichtung, die z.B. nach Art einer Schwenkeinrichtung gestaltet ist und im mittleren Bereich der Traverse 8 angreift, mit einer Kraft beaufschlagt und unterstützt durch eine aus reibungsarmem Kunststoff bestehende Scheibe 15 aus dem Bremssattelgehäuse 2 geführt. Die Stellung der Kraftübertragungselemente 5 innerhalb des Bremssattelgehäuses 2 hängt wesentlich vom Verschleiß der Scheibenbremse ab. Mit steigendem Verschleiß werden die Kraftübertragungselemente 5 über eine ebenfalls in dem Bremssattelgehäuse 2 untergebrachte Nachsteheinrichtung in Richtung der Bremsscheibe 11 nachgestellt, so dass sie mit der Zeit immer weiter aus dem Gehäuse 2 austreten.

Zur Bremsscheibe 11 hin ist das Bremssattelgehäuse 2 durch die Scheiben 15 und ferner durch eine Verschlussplatte 9 verschlossen. Um ein Eindringen von feinem Staub oder Feuchte im Bereich der Durchführung der Kraftübertragungselemente 5 in das Innere 24 des Bremssattelgehäuses 2 zu verhindern, ist als Abdichtung jeweils ein streck- und stauchbares Dichtelement 10 in der Form eines Längendifferenzen flexibel aufnehmenden Faltenbalgs vorgesehen. Das Dichtelement 10 besteht, wie Fig. 1 erkennen lässt, aus einem ersten Endbereich 16, einem mittleren Bereich 18 und einem zweiten Endbereich 17. Die Endbereiche 16, 17 sind gegenüber dem übrigen Dichtelement 10 verdickt ausgeführt und einerseits an der Verschlussplatte 9 und damit gegenüber dem Bremssattelgehäuse 2, und andererseits am bremsscheibenabgewandten Ende des Kraftübertragungselements 5 festgelegt. Der mittlere Bereich 18 des Dichtelements 10 ist streck- bzw. stauchbar, so dass sich seine axiale Länge entsprechend der Stellung des Kraftübertragungselements 5 anpassen kann. Insgesamt ist das Dichtelement 10 nach Art eines mehrstufigen, im Ausführungsbeispiel vierstufigen Faltenbalgs gestaltet.

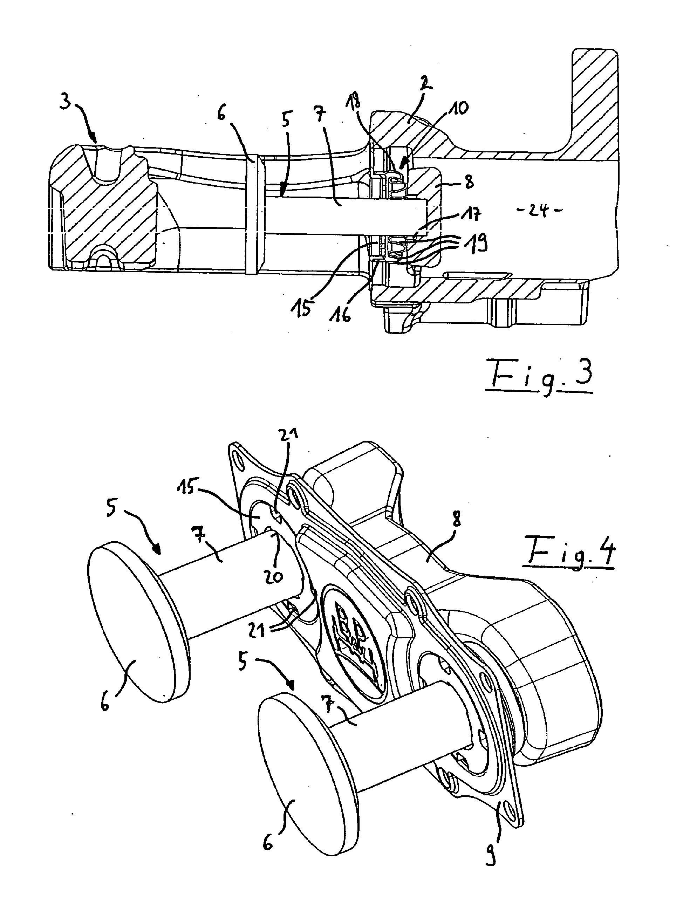

Die Fign. 3 und 4 zeigen Komponenten der erfindungsgemäßen Scheibenbremse nach Fig. 1 in einer zweiten Endposition, in welcher die Kraftübertragungselemente 5 vollständig aus dem Bremssattelgehäuse 2 heraus gefahren sind bzw. die Scheibenbremse ihren maximalen Verschleißzustand erreicht hat, in einer Schnitt- bzw. einer perspektivischen Darstellung. Die Kraftübertragungselemente 5 stehen in dieser zweiten Endposition weit aus dem Bremssattelgehäuse 2 in den Raum zwischen Bremssattelgehäuse 2 und Bremsbelag 12 hervor. Alle in diesem Zwischenraum befindlichen Komponenten der Scheibenbremse sind im Fahrbetrieb Spritzwasser, Steinschlägen usw. ausgesetzt. Wie sich Fig. 3 entnehmen lässt, verbleibt das gegen solche äußeren Einflüsse empfindliche Dichtteil 10 aber selbst in der zweiten Endstellung im Bremssattelgehäuse 2, da der mittlere Bereich 18 des Dichtelements 10 nach Art eines Faltenbalgs in mehreren radial beabstandeten Lagen 19 geschichtet ist. Die Lagen 19 müssen nicht zwingend mit radialem Abstand zueinander angeordnet sein, vielmehr ist es ebenso möglich, dass sich die Lagen 19 bei Stauchung des mittleren Bereichs 18 mit axialem Abstand nebeneinander legen.

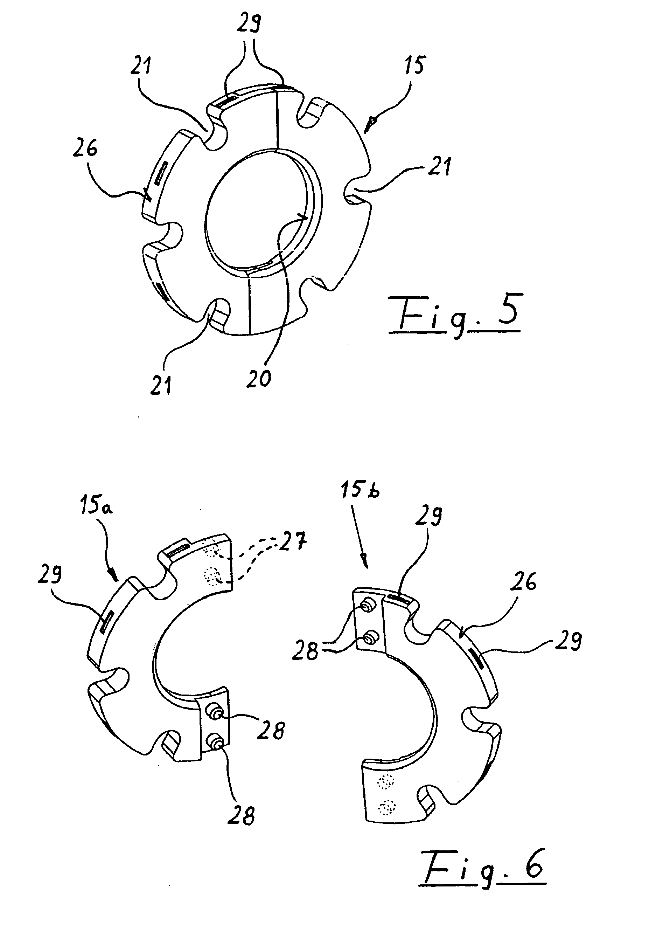

Der Aufbau der das Kraftübertragungselement 5 axial führenden Scheibe 15 lässt sich hinsichtlich der Einbausituation der Fig. 4, und hinsichtlich der Gestaltung im einzelnen den Fign. 5 und 6 entnehmen. Jede der formschlüssig in die Verschlussplatte 9 eingeklemmten Scheiben 15 weist innen Führungsflächen 20 auf, die um das Kraftübertragungselement 5 herum angeordnet sind, und deren Durchmesser ebenso groß oder nur geringfügig größer ist, als der entsprechende Durchmesser des Schafts 7. Die Fig. 4 zeigt eine Ausführung, bei der die Führungsflächen 20 nur segmentweise um den Schaft 7 herum verteilt sind. Demgegenüber ist die Ausführungsform nach den Fign. 5 und 6 insoweit abweichend, als hier die Führungsfläche 20 eine geschlossene Kreisöffnung ist, so dass hier der Schaft 7 auf seinem gesamten Umfang durch die Führungsfläche 20 am Innenrand der Scheibe 15 geführt ist.

Im Bereich Ihres äußeren Randes 26 ist die Scheibe 15 mit mehreren Durchtrittsöffnungen 21 versehen, über die z. B. Feuchtigkeit aus dem von dem Kraftübertragungselement 5 und dem Dichtelement 10 gebildeten Zwischenraum austreten kann. Die Durchtrittsöffnungen 21 sind gleichmäßig über den Umfang der Scheibe verteilt. Ihre Größe ist so gewählt, dass einerseits der Austritt von Feuchtigkeit stets gewährleistet ist, andererseits aber gröbere Partikel wie z. B. kleine Steine nicht in das Innere der Bremse und insbesondere nicht in den Bereich der empfindlichen Abdichtung durch das Dichtelement 10 eindringen können. Des weiteren bildet die Scheibe 15 einen Hitzeschild welcher verhindert, dass die von der Bremsscheibe bzw. den Bremsbelägen 12 ausgehende Strahlungshitze unmittelbar bis in den Bereich der Abdichtung durch das Dichtelement 10 gelangt. Insofern dient die Scheibe 15 daher vorrangig als Schutzscheibe. Darüber hinaus übernimmt die Schutzscheibe 15 die bereits erwähnte Funktion einer Axialführung für das Kraftübertragungselement 5.

Gemäß den Fign. 5 und 6 kann die Schutzscheibe 15 teilbar gestaltet sein. Hierdurch wird erreicht, dass die Scheibe 15 ohne Trennung des Druckstempels 5 von der Traverse 8 und ohne Demontage des Dichtelements 10 auswechselbar ist.

Die Fig. 5 zeigt die zusammengesetzte Schutzscheibe, wohingegen Fig. 6 die beiden voneinander getrennten Teilscheiben 15a, 15b erkennen lässt. Die jeweils einen Halbring bildenden Teilscheiben 15a, 15b sind durch Formschlusselemente 27, 28 lösbar miteinander verbunden. Bei den Formschlusselementen handelt es sich um axial ausgerichtete Sacklöcher 27 bzw. korrespondierende Zapfen 28. Auf diese Weise wird es ermöglicht, dass die Teilscheiben 15a, 15b an ihren Überlappungsbereichen in unterschiedlichen axialen Richtungen voneinander trennbar gestaltet sind, was insbesondere die Demontage der Teilscheiben 15a, 15b erleichtert. Das Trennen der Teilscheiben kann mittels gegenseitigem Verdrehen oder Verkippen leicht ohne Werkzeug von Hand erfolgen.

Vorteilhaft bei den in den Fign. 5 und 6 dargestellten Teilscheiben 15a und 15b ist deren geometrische Gleichheit. Es wird nur ein Herstellwerkzeug bzw. eine Herstellform benötigt.

Wenngleich bei der dargestellten Ausführungsform die Teilscheiben 15a, 15b axial voneinander trennbar sind, ist auch eine radiale Trennbarkeit denkbar.

Um ihre Schutzfunktion auszuüben, können die Teilscheiben 15a, 15b aus Metall bestehen. Bevorzugt wird jedoch die dargestellte Ausführungsform, bei welcher jede Schutzscheibe 15 aus zwei Teilhälften aus thermisch belastbarem Kunststoff besteht, zumal dieser Werkstoff gute Gleiteigenschaften an den Führungsflächen 20 zeigt.

Auf Ihrem Umfang, d. h. auf Ihrem äußeren Rand 26, ist die Schutzscheibe 15 mit Vorsprüngen versehen, die als Schnappelemente 29 dienen. Diese Schnappelemente 29 können in eine entsprechend gestaltete Nut 9a in der Öffnung der Verschlussplatte 9 formschlüssig eingreifen, um so die Schutzscheibe 15 in der Öffnung der Verschlussplatte 9 zu sichern.

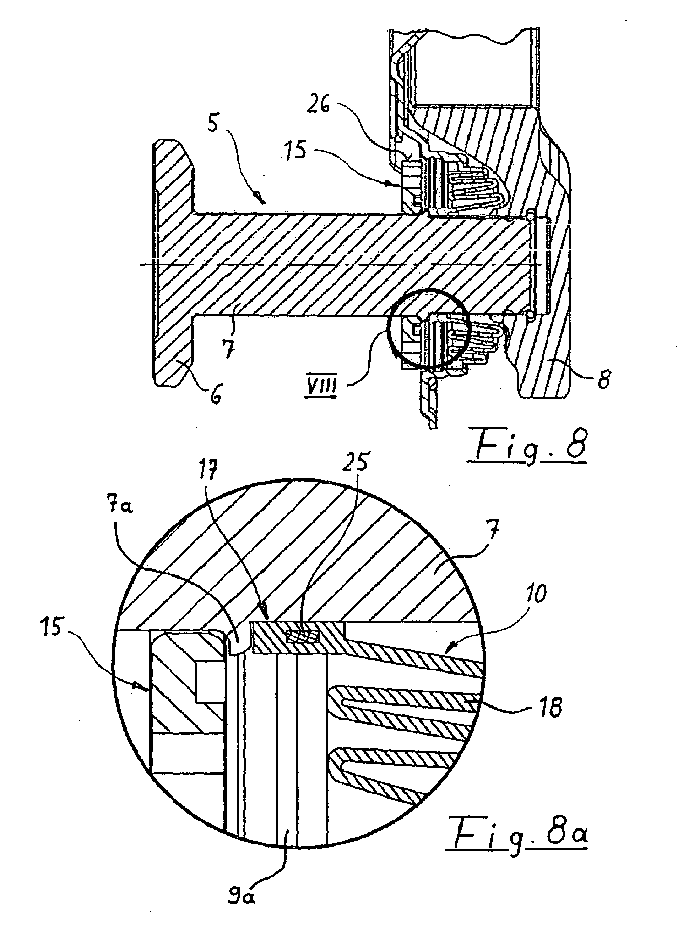

Bei der Ausführungsform nach Fig. 8 wird die Scheibe 15 aus der Verschlussplatte 9 bzw. aus der Nut 9a durch Herausdrücken demontiert. Dies wird mittels eines Demontage- bzw. Hebewerkzeuges bewerkstelligt. Das Werkzeug stützt sich am Gehäuse 2 ab, und greift gleichzeitig durch Schwenken hinter den Druckteller 6 des Druckstempels 5, um so den Druckstempel 5 aus der Traverse 8 zu lösen. Dabei stößt ein Bund 7a des Druckstempels 5 an die Scheibe 15, und nimmt diese in Längsrichtung mit.

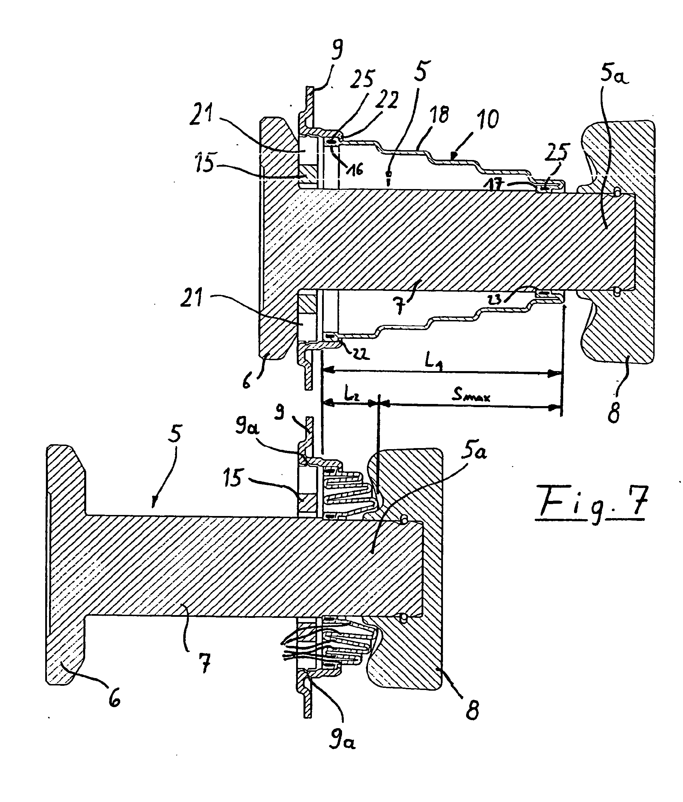

In Fig. 7 sind die beiden Endstellungen des Kraftübertragungselements 5 in einer vergrößerten Schnittdarstellung gegenüber gestellt. In der hinteren Endstellung des Kraftübertragungselements 5 weist das Dichtelement 10 eine axiale Länge L₁ auf. Bei Verschieben der Traverse 8 in Richtung der Bremsscheibe 11 wandert das Kraftübertragungselement 5 vorne aus dem Bremssattelgehäuse 2 hinaus. Dabei erfährt das Dichtelement 10 eine Stauchung S, zugleich wandert das stempelseitige Ende 17 in Richtung zu dem gehäuseseitigen Ende 16. Im unteren Teil von Fig. 7 ist das Kraftübertragungselement 5 in seiner vorderen Endposition, d.h. im Falle maximaler Stauchung Sₘₐₓ = L₁ - L₂ dargestellt. Der mittlere Bereich 18 des Dichtelements 10 ist in dieser Stellung in insgesamt sechs radial voneinander beabstandeten Lagen 19 übereinander geschichtet, weshalb das in der ersten Endposition noch schlauchige Dichtelement 10 eine insgesamt sehr kompakte Gestalt einnimmt. Trotzdem befindet sich das Dichtelement 10 weiterhin geschützt hinter der Scheibe 15.

Die Endbereiche 16, 17 sind beim Ausführungsbeispiel mit einer ringförmigen Metalleinlage 25 verstärkt, um den Sitz des Dichtelements 19 innerhalb der Öffnung der Verschlussplatte 9 bzw. weit hinten auf dem Umfang des Kraftübertragungselements 5 zu verbessern und so eine verbesserte Dichtwirkung zwischen den Endbereichen 16, 17 und den anliegenden Flächen der Verschlußplatte 9 bzw. des Schafts 7 zu erreichen. Das gehäuseseitige Ende 16 klemmt in einer nach hinten gebördelt verlaufenden Öffnung der Verschlussplatte 9 nahe der Außenkante des Bremssattelgehäuses und ist über einen Hinterschnitt 22 gegen axiales Verrutschen gesichert. Das stempelseitige Ende 17 des Dichtelements 10 ist zwischen einem Absatz 23 des Schafts 7 und der Traverse 8 gehalten und so in seiner axialen Position relativ weit hinten auf dem Schaft 7 nahe dessen rückwärtigem Ende 5a gesichert.

Die Ausführung gemäß Fig. 7 ist leicht verschieden zu der gemäß den Fign. 1 bis 4. Das in den Fign. 1 bis 4 dargestellte Dichtelement 10 weist einen mittleren Bereich 18 auf, der sich bei axialer Stauchung zwischen den beiden Endbereichen 16, 17 schichtet (Fig. 3), wodurch eine ungeradzahlige Anzahl Lagen 19 entsteht. Der mittlere Bereich des Dichtelementes 10 gemäß Fig. 7 schichtet sich hingegen auf der bremsscheibenabgewandten Seite der beiden Endbereiche, so dass eine geradzahlige Anzahl von insgesamt sechs Lagen 19 entsteht.

### Bezugszeichen

- 1: Bremssattel
- 2: Gehäuse
- 3: Bremssattelbrücke
- 4: Öffnung
- 5: Kraftübertragungselement, Druckstempel
- 5a: rückwärtiges Ende
- 6: Druckteiier
- 7: Schaft
- 7a: Bund
- 8: Traverse
- 9: Verschlussplatte
- 9a: Nut
- 10: Dichtelement
- 11: Bremsscheibe
- 12: Bremsbelag
- 13: Reibbelag
- 14: Belagträgerplatte
- 15: Scheibe, Schutzscheibe
- 15a: Teilscheibe
- 15b: Teilscheibe
- 16: erster Endbereich
- 17: zweiter Endbereich
- 18: mittlerer Bereich
- 19: Lage
- 20: Führungsfläche, Öffnung
- 21: Durchtrittsöffnung
- 22: Hinterschnitt
- 23: Absatz
- 24: Innenraum
- 25: Metalleinlage
- 26: äußerer Rand
- 27: Formschlusselement
- 28: Formschlusselement
- 29: Schnappelement

- S: Stauchung
- L₁: Länge
- L₂: Länge

## Patentansprüche

1. Scheibenbremse für Fahrzeuge, mit einem eine Bremsscheibe (11) übergreifenden Bremssattel (1), in dessen gegenüber äußeren Verunreinigungen abgedichtetem Bremssattelgehäuse (2) ein den Bremsbelag (12) der Scheibenbremse beaufschlagendes Kraftübertragungselement (5) verschiebbar aufgenommen ist, wobei ein Dichtelement (10) mit einem ersten Endbereich (16) gegenüber dem Bremssattelgehäuse (2) und mit einem zweiten Endbereich (17) gegenüber dem Kraftübertragungselement (5) festgelegt ist, und der gegenüber dem Kraftübertragungselement (5) festgelegte Endbereich (17) nahe dem bremsscheibenabgewandten Ende (5a) des Kraftübertragungselements (5) festgelegt ist,
**dadurch gekennzeichnet,**
**dass** das Dichtelement (10) einen axial stauchbaren mittleren Bereich (18) aufweist, der als sich bei axialer Stauchung (S) in mehreren Lagen (19) zwischen dem ersten und dem zweiten Endbereich (16, 17) schichtender Faltenbalg ausgebildet ist.

2. Scheibenbremse nach Anspruch 1, **dadurch gekennzeichnet, dass** die Lagen (19) in radialer Richtung übereinander geschichtet sind.

3. Scheibenbremse nach Anspruch 1, **dadurch gekennzeichnet, dass** die Lagen (19) in axialer Richtung geschichtet sind.

4. Scheibenbremse nach Anspruch 1, **dadurch gekennzeichnet, dass** der erste Endbereich (16) an einer das Bremssattelgehäuse (2) zur Bremsscheibe (11) hin abdeckenden Verschlussplatte (9) festgelegt ist.

5. Scheibenbremse nach einem der Ansprüche 1 bis 6, **dadurch gekennzeichnet, dass** die Endbereiche (16, 17) mit einer Metalleinlage (25) verstärkt sind.

6. Scheibenbremse nach einem der vorangehenden Ansprüche, **dadurch gekennzeichnet, dass** das Kraftübertragungselement (5) aus einem innerhalb des Bremssattelgehäuses (2) verschiebbar geführten Schaft (7) sowie einem außerhalb des Bremssattelgehäuses (2) angeordneten Druckteller (6) besteht.

7. Scheibenbremse nach einem der Ansprüche 1 bis 7, **gekennzeichnet durch** eine zwischen dem Bremsbelag (12) und dem Dichtelement (10) angeordnete Scheibe (15), die das Kraftübertragungselement (5) ringförmig umgibt und mit ihrem Außenrand an dem Bremssattelgehäuse (2) festgelegt ist.

8. Scheibenbremse nach einem der vorangehenden Ansprüche, **dadurch gekennzeichnet, dass** zwei Kraftübertragungselemente (5) über eine Traverse (8) miteinander in Verbindung stehen.

## Claims

1. A disc brake for vehicles, with a brake calliper (1) which engages over a brake disc (11) and in whose brake-calliper housing (2) sealed off from extraneous dirt a force-transmitting element (5) acting upon the brake pad (12) of the disc brake is received in a displaceable manner, wherein a sealing element (10) is fastened with a first end region (16) opposite the brake-calliper housing (2) and with a second end region (17) opposite the force-transmitting element (5), and the end region (17) fastened opposite the force-transmitting element (5) is fastened in the vicinity of the end (5a) of the force-transmitting element (5) facing away from the brake disc, **characterized in that** the sealing element (10) has a middle region (18) which is axially compressible and which is designed in the form of a folding bellows folded into a plurality of layers (19) between the first and the second end regions (16, 17) when compressed axially (S).

2. A disc brake according to claim 1, **characterized in that** the layers (19) are folded one above the other in the radial direction.

3. A disc brake according to claim 1, **characterized in that** the layers (19) are folded in the axial direction.

4. A disc brake according to claim 1, **characterized in that** the first end region (16) is fixed to a closure plate (9) covering the brake-calliper housing (2) towards the brake disc (11).

5. A disc brake according to any one of claims 1 to 6, **characterized in that** the end regions (16, 17) are reinforced with a metallic inlay (25).

6. A disc brake according to any one of the preceding claims, **characterized in that** the force-transmitting element (5) comprises a shaft (7) guided so as to be displaceable inside the brake-calliper housing (2) and a thrust plate (6) arranged outside the brake-calliper housing (2).

7. A disc brake according to any one of claims 1 to 7, **characterized by** a disc (15) which is arranged between the brake pad (12) and the sealing element (10) and which surrounds the force-transmitting element (5) in an annular manner and is fastened by its outer edge to the brake-calliper housing (2).

8. A disc brake according to any one of the preceding claims, **characterized in that** two force-transmitting elements (5) are connected to each other by way of a cross member (8).

## Revendications

1. Frein à disque pour véhicules, comportant un étrier de frein (1), qui passe au-dessus d'un disque de frein (11) et dans le carter (2) duquel, rendu étanche face aux pollutions extérieures, est logé de manière mobile en translation un élément de transmission de force (5) qui sollicite la garniture de frein (12) du frein à disque, un élément d'étanchéité (10) étant fixé avec une première zone d'extrémité (16) par rapport au carter (2) de l'étrier de frein et avec une deuxième zone d'extrémité (17) par rapport à l'élément de transmission de force (5), et la zone d'extrémité (17) fixée par rapport à l'élément de transmission de force (5) étant fixée à proximité de l'extrémité (5a), opposée au disque de frein, de l'élément de transmission de force (5),
**caractérisé en ce que** l'élément d'étanchéité (10) comporte une zone centrale (18) compressible dans la direction axiale, laquelle est réalisée sous la forme d'un soufflet qui, dans le cas d'une compression axiale (S), se dispose en plusieurs couches (19) entre la première et la deuxième zone d'extrémité (16, 17).

2. Frein à disque selon la revendication 1, **caractérisé en ce que** les couches (19) sont disposées en couches les unes au-dessus des autres dans la direction radiale.

3. Frein à disque selon la revendication 1, **caractérisé en ce que** les couches (19) sont disposées en couches dans la direction axiale.

4. Frein à disque selon la revendication 1, **caractérisé en ce que** la première zone d'extrémité (16) est fixée sur une plaque de fermeture (9) recouvrant le carter (2) de l'étrier de frein dans la direction vers le disque de frein (11).

5. Frein à disque selon l'une quelconque des revendications 1 à 6, **caractérisé en ce que** les zones d'extrémité (16, 17) sont renforcées par un insert métallique (25).

6. Frein à disque selon l'une quelconque des revendications précédentes, **caractérisé en ce que** l'élément de transmission de force (5) est formé par une tige (7), logée mobile en translation à l'intérieur du carter (2) de l'étrier de frein, et par une plaque de pression (6), disposée à l'extérieur du carter (2) de l'étrier de frein.

7. Frein à disque selon l'une quelconque des revendications 1 à 7, **caractérisé par** un disque (15), qui est monté entre la garniture de frein (12) et l'élément d'étanchéité (10) et qui entoure en forme d'anneau l'élément de transmission de force (5) et est fixé par son bord extérieur contre le carter (2) de l'étrier de frein.

8. Frein à disque selon l'une quelconque des revendications précédentes, **caractérisé en ce que** deux éléments de transmission de force (5) sont reliés l'un à l'autre par l'intermédiaire d'une traverse (8).
